# FASCICULE DE BREVET EUROPEEN

(11) **EP 2 507 077 B1**
(45) Date de publication et mention de la délivrance du brevet: **16.10.2013**
(21) Numéro de dépôt: 10805457.8
(22) Date de dépôt: 01.12.2010
(51) Int. Cl.: B60C 11/24

(54) **PROCEDE DE DETECTION DE L'USURE D'UN PNEUMATIQUE**
VERFAHREN ZUR ERKENNUNG VON REIFENVERSCHLEISS
METHOD FOR DETECTING THE WEAR OF A TYRE

(30) Priorité: 02.12.2009 FR 0958586
(43) Date de publication de la demande: 10.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PATURLE, Antoine, F-63430 Pont du Château (FR); MOSNIER, David, F-63000 Clermont-Ferrand (FR)
(74) Mandataire: Dequire, Philippe Jean-Marie Denis
(86) Numéro de dépôt international: PCT/FR2010/052584
(87) Numéro de publication internationale: WO 2011/067535

(56) Documents cités:
- WO-A1-2005/003698
- DE-A1-102004 036 811
- US-A1- 2004 154 715

## Description

La présente invention concerne un procédé de détection de l'usure d'un pneumatique. Elle s'applique notamment, s'en s'y restreindre, aux pneumatiques pour véhicules de tout type, tourisme ou poids lourds.

On connaît de FR 2 816 887 un procédé de détection de l'usure d'un pneumatique au moyen d'un dispositif de traitement.

Lorsque le pneumatique est usé au-delà d'un seuil d'usure radiale prédéterminé, des témoins d'usure sonores émettent un bruit caractéristique de fréquence caractéristique. Cette fréquence caractéristique est fonction notamment de la vitesse du véhicule, de la géométrie d'implantation des témoins d'usure sonores et de leur nombre.

Connaissant la fréquence caractéristique du signal acoustique, on filtre alors le signal acoustique au voisinage de la fréquence caractéristique de façon à en extraire un signal témoin. Puis, on calcule un indice de confiance relatif au signal témoin. Si l'indice est supérieur à un seuil prédéterminé, on sait que l'on a franchit le seuil d'usure radiale prédéterminé.

Toutefois, afin de mettre en oeuvre ce procédé, il est nécessaire de connaître et de stocker certains paramètres du pneumatique et des témoins d'usure sonores, notamment la vitesse du véhicule, la géométrie d'implantation des témoins d'usure sonores et leur nombre.

Il est donc nécessaire de disposer d'une unité de mémoire dans laquelle on entre et on stocke ces paramètres.

Dans le cas de la vitesse, il est nécessaire de disposer d'une unité de mesure de la vitesse. Cette unité est reliée au dispositif de traitement ce qui entraîne un surcoût lors de l'installation du dispositif.

En outre, lorsqu'on change le pneumatique, les paramètres de ce dernier, notamment la géométrie d'implantation des témoins d'usure sonores et leur nombre, peuvent changer. Cela implique alors de modifier les paramètres dans l'unité de mémoire.

L'invention a pour but de fournir un procédé robuste de détection de l'usure d'un pneumatique ne nécessitant pas nécessairement la connaissance des paramètres ci-dessus.

A cet effet, l'invention a pour objet un procédé de détection de l'usure d'un pneumatique comportant un ensemble d'au moins un témoin d'usure sonore émettant à partir d'un seuil d'usure radial prédéterminé un bruit d'empreinte acoustique comportant plusieurs composantes fréquentielles élémentaires d'empreinte acoustique, caractérisé en ce que :
- on acquiert un signal acoustique susceptible de comprendre le bruit d'empreinte acoustique, le signal acoustique comprenant plusieurs composantes fréquentielles élémentaires ;
- on énumère plusieurs séries de composantes fréquentielles élémentaires, chaque série énumérée étant susceptible de former au moins une partie des composantes fréquentielles élémentaires d'empreinte acoustique ;
- on sélectionne, parmi les séries énumérées, une série, appelée série d'empreinte acoustique ;
- on détermine un indice de confiance, dit local, de la série d'empreinte acoustique ;
- si un indice de confiance déterminé à partir de l'indice de confiance local est, en valeur absolue, supérieur ou inférieur à un seuil prédéterminé associé à cet indice de confiance déterminé à partir de l'indice de confiance local, on émet une alerte de l'usure du pneumatique.

Le procédé selon l'invention permet d'alerter un utilisateur du pneumatique sans nécessairement connaître les paramètres énoncés ci-dessus. En effet, les composantes fréquentielles élémentaires du bruit d'empreinte acoustique sont caractéristiques du bruit émis par les témoins. Ainsi, lorsque le seuil d'usure radiale du pneumatique est dépassé, le bruit d'empreinte acoustique émis par les témoins comprend plusieurs composantes fréquentielles élémentaires répartis en fréquence en fonction des paramètres que l'on ne souhaite pas avoir à entrer ou modifier dans le dispositif de traitement. Cette répartition en fréquence est conforme à un motif prédéterminé. Ce motif est défini par des rapports d'espacements entre les différents signaux élémentaires.

Ainsi, on identifie des composantes fréquentielles élémentaires du signal acoustique acquis. En énumérant plusieurs séries composées de composantes fréquentielles élémentaires et susceptible de former au moins une partie des composantes fréquentielles élémentaires d'empreinte acoustique, c'est-à-dire conformes au motif prédéterminé, on énumère des séries de composantes fréquentielles élémentaires susceptibles chacune d'être caractéristique du bruit émis par l'ensemble de témoins d'usure sonores. Comme le bruit d'empreinte acoustique est unique et présente des caractéristiques remarquables et distinctives grâce à son motif prédéterminé, la série d'empreinte acoustique peut être sélectionnée parmi les séries énumérées au moyen de critères prédéterminés. Une fois la série d'empreinte acoustique sélectionnée, on s'assure que l'on ne va pas émettre à tort une alerte en calculant un indice de confiance local. L'indice calculé à partir de l'indice de confiance local peut être égal à l'indice de confiance local lui-même.

En outre, en travaillant avec un signal dans le domaine fréquentiel, on obtient un rapport signal sur bruit très supérieur au rapport signal sur bruit du signal d'amplitude correspondant. La sélection de la série d'empreinte acoustique est ainsi plus fiable.

Avantageusement, les témoins d'usure sonores sont équi-répartis circonférentiellement dans une bande de roulement du pneumatique.

L'équi-répartition circonférentielle des témoins permet d'obtenir une équi-répartition temporelle du bruit émis par chaque témoin lorsque le pneumatique roule à une vitesse constante. Dans le cas où le pneumatique ne comporte qu'un seul témoin, celui-ci permet également une équi-répartition temporelle du bruit émis lorsque le pneumatique roule à une vitesse constante.

De préférence, le motif est un motif dans lequel les composantes fréquentielles élémentaires sont espacées deux à deux d'un intervalle fréquentiel sensiblement constant. Dans ce cas, les rapports d'espacement sont sensiblement tous égaux. En variante, les rapports d'espacement sont différents.

Avantageusement, la série d'empreinte acoustique forme au moins une partie d'un peigne de Dirac.

Dans ce cas, chaque signal de la série forme un pic. Chaque pic représente une dent d'un peigne, appelé peigne de Dirac. De manière analogue à un peigne, chaque pic de la série d'empreinte acoustique est sensiblement distant d'au moins une dent adjacente, voire deux, d'un écart fréquentiel sensiblement constant entre chaque dent.

Une telle série d'empreinte acoustique présente un motif de composantes fréquentielles élémentaires remarquable, unique et donc facile à détecter.

Selon une caractéristique optionnelle du procédé, l'ensemble comprend de 1 à 32 et préférentiellement de 1 à 12 témoins.

Plus le nombre de témoins d'usure est important, plus l'écart fréquentiel entre les composantes fréquentielles élémentaires du bruit émis par les témoins est important, moins la série d'empreinte acoustique recherchée comporte de composantes fréquentielles élémentaires et donc plus il est difficile de détecter la série d'empreinte acoustique. En effet, plus le bruit d'empreinte acoustique comprend de composantes fréquentielles élémentaires, plus la série d'empreinte acoustique est facilement identifiable parmi les composantes fréquentielles élémentaires du signal acoustique acquis. Ainsi, moins le nombre de témoins est grand, plus la sélection de la série d'empreinte acoustique est facile, plus la détection de l'usure est robuste. En outre, pour des raisons de fabrication du pneumatique et de compatibilité avec les sculptures de la bande de roulement, il est avantageux de réduire le nombre de témoins autant que possible.

Optionnellement, chaque témoin comprend une cavité sonore conformée de sorte que, au-delà d'un seuil d'usure radiale prédéterminé, la cavité débouche radialement vers l'extérieur du pneumatique et est conformée de manière à être fermée par le sol de manière sensiblement étanche lors de son passage dans l'aire du contact du pneumatique avec le sol, le volume total de la ou des cavités étant supérieur ou égal à 2 cm³, de préférence 5 cm³.

En dessous de 2 cm³, les composantes fréquentielles élémentaires du bruit d'empreinte acoustique émis par les témoins ne présentent pas un niveau spectral, c'est-à-dire une intensité en fréquence, suffisante pour être distinguée de façon robuste des composantes fréquentielles élémentaires correspondant aux bruits du moteur et de la chaîne cinématique qui y est associée. En outre, cette valeur est suffisamment faible pour permettre de ménager des cavités dans un pneumatique classique sans détériorer ses performances.

Selon une caractéristique optionnelle du procédé, on traite le signal acoustique acquis en mettant en oeuvre au moins l'une des étapes suivantes:
- On détermine le spectre fréquentiel du signal acoustique acquis.
- On isole un domaine fréquentiel du spectre fréquentiel du signal acoustique acquis compris entre 500 et 2500 Hz. L'essentiel de l'énergie spectrale du bruit mesuré dans un véhicule se situe dans un intervalle de fréquences inférieur à 150 Hz. Ces fréquences correspondent aux bruits du moteur et de la chaîne cinématique qui y est associée. Le bruit émis par les témoins, notamment dans le cas de cavités, se situe dans un intervalle fréquentiel compris entre 500 et 2500 Hz. Toutefois, celui-ci présente une énergie spectrale brute très inférieure aux bruits du moteur et de la chaîne cinématique. Ainsi, en isolant le domaine fréquentiel dans lequel seul le bruit émis par les témoins est présent, on améliore la précision du procédé de détection et on réduit le nombre de données à manipuler. En outre, on bénéficie d'un signal détectable sans que ce dernier ne soit audible au voisinage du pneumatique.
- On isole des composantes fréquentielles élémentaires du spectre fréquentiel du signal acoustique acquis présentant un niveau spectral supérieur à un seuil prédéterminé. En effet, les composantes fréquentielles élémentaires du bruit d'empreinte acoustique émis par les témoins présentent, en fréquence, un niveau spectral bien supérieur au bruit environnant. Ainsi, des composantes fréquentielles élémentaires de faible niveau spectral ne peuvent pas faire partie des composantes fréquentielles élémentaires du bruit émis par les témoins. On peut donc ne garder que les composantes fréquentielles élémentaires présentant un niveau spectral supérieur au seuil sans risquer de supprimer des composantes fréquentielles élémentaires utiles à la détection de l'usure.

De préférence, on sélectionne au moins une série d'au moins deux composantes fréquentielles élémentaires, chaque composante fréquentielle élémentaire de la série étant distante d'au moins une composante fréquentielle élémentaire adjacente de la série d'un écart fréquentiel compris dans un intervalle fréquentiel de référence prédéterminé.

L'écart fréquentiel entre les composantes fréquentielles élémentaires du bruit d'empreinte acoustique est caractéristique du bruit émis par les témoins. Ainsi, lorsque le seuil d'usure radiale du pneumatique est dépassé, le bruit d'empreinte acoustique émis par les témoins comprend plusieurs composantes fréquentielles élémentaires répartis en fréquence selon le motif prédéterminé. L'intervalle fréquentiel de référence prédéterminé correspond à l'ensemble des écarts fréquentiels qui peuvent séparer les composantes fréquentielles élémentaires de la série d'empreinte acoustique recherchée. Ainsi, cet intervalle fréquentiel de référence couvre tous les écarts fréquentiels pouvant séparer deux composantes fréquentielles élémentaires de la série d'empreinte acoustique recherchée.

On détermine l'intervalle fréquentiel de référence en tenant compte des paramètres que l'on ne souhaite pas avoir à entrer ou modifier dans le dispositif de traitement. En prenant des valeurs extrêmes de ces paramètres, on détermine des bornes de l'intervalle fréquentiel de référence. Ces paramètres comprennent notamment la vitesse du véhicule sur lequel est monté le pneumatique, le nombre de témoins, les caractéristiques géométriques des témoins et les caractéristiques géométriques du pneumatique, notamment sa circonférence lorsque le seuil d'usure radiale est dépassé.

Afin de sélectionner correctement la série d'empreinte acoustique, on détermine si les composantes fréquentielles élémentaires de la série d'empreinte acoustique correspondent bien à des composantes fréquentielles élémentaires susceptibles de constituer les composantes fréquentielles élémentaires du bruit d'empreinte acoustique émis par les témoins. Comme ces composantes fréquentielles élémentaires sont séparés d'un ou plusieurs écarts fréquentiels compris dans l'intervalle fréquentiel de référence, on peut sélectionner la série d'empreinte acoustique en comparant certaines caractéristiques des composantes fréquentielles élémentaires du signal acoustique à des caractéristiques d'une ou plusieurs séries théoriques ou bien encore en comparant plusieurs séries de composantes fréquentielles élémentaires entre-elles. Cette sélection est notamment faite en fonction de caractéristiques du motif prédéterminé comprenant le rapport d'espacement des composantes fréquentielles élémentaires ainsi que des valeurs d'espacement des composantes fréquentielles élémentaires.

Selon d'autres caractéristiques optionnelles du procédé:
- L'intervalle fréquentiel de référence prédéterminé est compris entre 1 et 300 Hz. Cet intervalle fréquentiel comprend l'écart fréquentiel susceptible de séparer les composantes fréquentielles élémentaires du bruit émis par les témoins. En effet, comme précisé ci-dessus, on détermine l'intervalle fréquentiel de référence en tenant compte des valeurs extrêmes des paramètres que l'on ne souhaite pas avoir à entrer ou modifier. Ainsi, pour un véhicule de tourisme, pour une vitesse variant entre 10 et 130 km/h, un nombre de témoins variant entre 1 et 20 et une circonférence variant entre 1,30 m et 3,0 m, l'écart fréquentiel des composantes fréquentielles élémentaires du bruit émis par les témoins appartient à l'intervalle compris entre 1 Hz et environ 300 Hz. On retrouve une gamme de fréquences similaire pour les véhicules poids lourd roulant à des vitesses inférieures à 90 km/heure, équipés de pneumatiques avec 32 témoins au maximum et de circonférence variant entre 2,1 et 3,7 m.
- On énumère tous les couples de composantes fréquentielles élémentaires du signal acoustique acquis et on détermine un écart fréquentiel séparant les composantes fréquentielles élémentaires de chaque couple l'un de l'autre.
- On classe chaque écart fréquentiel de chaque couple de composantes fréquentielles élémentaires dans une famille, dite d'écart fréquentiel, définie par un intervalle d'écart fréquentiel familial. De préférence, l'intervalle d'écart fréquentiel familial est égal à quatre fois la résolution fréquentielle du spectre. En outre, plus la durée d'acquisition est grande, meilleur est le rapport signal sur bruit dans le domaine fréquentiel du signal acoustique isolé. Toutefois, sur cette durée d'acquisition, la vitesse doit être sensiblement constante de façon à ce que le signal fréquentiel soit fidèle au signal en amplitude mesuré. Une durée d'acquisition de l'ordre de 1s et une résolution fréquentielle de 1 Hz sont satisfaisantes pour assurer une bonne détection. Ainsi, chaque intervalle d'écart fréquentiel familial est sensiblement compris entre 2 et 4 Hz.
- On détermine chaque intervalle d'écart fréquentiel familial en fonction de l'intervalle fréquentiel de référence prédéterminé et d'une résolution fréquentielle du spectre fréquentiel du signal acoustique acquis.
- Dans chaque famille, on énumère toutes les séries de composantes fréquentielles élémentaires comprenant au moins deux composantes fréquentielles élémentaires consécutives séparées par un écart fréquentiel, dit sériel, compris dans l'intervalle d'écart fréquentiel familial. Cette étape d'énumération permet de s'assurer que l'on détectera, parmi toutes les séries énumérées, la série de composantes fréquentielles élémentaires correspondant au bruit émis par les témoins.

Avantageusement, pour chaque série de composantes fréquentielles élémentaires énumérée:
- on recherche au moins une composante fréquentielle élémentaire distante d'une des composantes fréquentielles élémentaires de la série d'un écart fréquentiel multiple de l'intervalle d'écart fréquentiel familial, et
- on complète chaque série énumérée par le ou les composantes fréquentielles élémentaires distantes d'une des composantes fréquentielles élémentaires de la série d'un écart fréquentiel multiple de l'intervalle d'écart fréquentiel familial.

Cette étape permet de reconstituer des séries altérées par l'acquisition et/ou l'isolation des signaux mesurés. En effet, lors de l'acquisition du signal acoustique et/ou des étapes d'isolation, des composantes fréquentielles élémentaires peuvent ne pas être acquis ou sélectionnés. Ainsi, par exemple, une série de composantes fréquentielles élémentaires énumérée peut comprendre plusieurs composantes fréquentielles élémentaires distantes deux à deux d'un écart compris dans l'intervalle d'écart familial alors qu'un autre composante fréquentielle élémentaire isolé est distant du dernier composante fréquentielle élémentaire de la série énumérée d'un écart fréquentiel sensiblement égal à deux fois l'intervalle d'écart familial de la série énumérée. Il est probable que cette composante fréquentielle élémentaire isolée appartienne également à la série mais qu'en l'absence d'une composante fréquentielle élémentaire intercalée à équidistance entre la dernière composante fréquentielle élémentaire de la série énumérée et cette composante fréquentielle élémentaire isolée, la composante fréquentielle élémentaire isolée n'ait pas été intégrée à la série énumérée.

De façon optionnelle, pour chaque famille:
- on détermine un indice sériel de chaque série énumérée en fonction d'au moins une première caractéristique prédéterminée de la série.

Dans un mode de réalisation du procédé, pour chaque famille:
- on sélectionne une série en comparant chaque indice sériel des séries énumérées.
- pour chaque série sélectionnée, on détermine un indice familial de la série sélectionnée dans chaque famille, en fonction d'au moins une deuxième caractéristique prédéterminée de la série sélectionnée, et
- on sélectionne la série d'empreinte acoustique en comparant chaque indice familial des séries sélectionnées.

Dans ce mode de réalisation, la série d'empreinte acoustique est sélectionnée en deux étapes successives. Dans une première étape, on sélectionne une série d'empreinte acoustique dans chaque famille grâce à la ou aux premières caractéristiques prédéterminées de chaque série. Dans une deuxième étape, on sélectionne la série d'empreinte acoustique parmi toutes les séries sélectionnées lors de la première étape. Cette deuxième sélection est effectuée grâce à la ou aux deuxièmes caractéristiques prédéterminées de chaque série sélectionnée.

Les premières et les deuxièmes caractéristiques peuvent être différentes de façon à ce que la sélection lors des deux étapes soit effectuée en fonction de critères différents. Ainsi, par exemple, une série sélectionnée grâce aux premières caractéristiques peut ne pas présenter le meilleur indice sériel de toutes les séries sélectionnées mais présenter le meilleur indice familial de toutes les séries sélectionnées ce qui en fait la série d'empreinte acoustique la plus susceptible de constituer la série de composantes fréquentielles élémentaires émis par les témoins.

Dans un autre mode de réalisation du procédé, on sélectionne la série d'empreinte acoustique en comparant chaque indice sériel de chaque série sélectionnée de chaque famille.

Dans ce mode de réalisation, les premières et deuxièmes caractéristiques sont identiques de sorte qu'en comparant tous les indices sériels calculés, on sélectionne la série d'empreinte acoustique sans avoir besoin de re-calculer un autre indice pour chaque série sélectionnée.

Selon d'autres caractéristiques optionnelles du procédé:
- On détermine un indice de pertinence de chaque première et/ou deuxième caractéristique, chaque indice de pertinence étant défini par une fonction variable de type sigmoïde de chaque première et/ou deuxième caractéristique. La fonction variable de type sigmoïde permet d'attribuer un indice de confiance très faible pour des valeurs des premières et/ou deuxièmes caractéristiques que l'on souhaite exclure indépendamment de toute autre considération sur la série car elles sont rédhibitoires pour que la série d'empreinte acoustique soit la série de signaux émis par les témoins. A l'inverse, la fonction variable de type sigmoïde permet d'attribuer un indice de confiance très élevé pour des valeurs des premières et/ou deuxièmes caractéristiques que l'on considère comme typique de la série de signaux émis par les témoins
- On détermine l'indice de confiance local à partir du ou des indices de pertinence respectivement de chaque première et/ou deuxième caractéristique. L'indice de confiance local peut être calculé en faisant un produit des indices de pertinence associés respectivement aux premières et aux deuxièmes caractéristiques. En variante, il peut s'agir d'une moyenne arithmétique ou pondérée. Ainsi, certaines caractéristiques des composantes fréquentielles élémentaires peuvent avoir une plus grande importance que d'autres.

Avantageusement, la ou les premières et/ou deuxièmes caractéristiques prédéterminées comprennent un rapport signal/bruit dans le domaine fréquentiel et/ou le nombre de composantes fréquentielles élémentaires dans la série et/ou une dispersion de l'écart fréquentiel entre les composantes fréquentielles élémentaires de la série et/ou la densité des composantes fréquentielles élémentaires de la série.

Dans un mode de réalisation du procédé,
- on acquiert plusieurs signaux acoustiques successifs dans le temps et susceptibles de comprendre le bruit d'empreinte acoustique, chaque signal acoustique comprenant plusieurs composantes fréquentielles élémentaires ;
- pour chaque signal acoustique, on sélectionne une série d'empreinte acoustique et on détermine un indice de confiance local de la série d'empreinte acoustique sélectionnée ;
- on détermine un indice de confiance, dit global, à partir des indices de confiance locaux des séries d'empreinte acoustique,
- si l'indice de confiance global est, en valeur absolue, supérieur ou inférieur à un seuil prédéterminé associé à cet indice de confiance global, on émet une alerte de l'usure du pneumatique.

L'amplitude du bruit émis par les témoins dans le domaine fréquentiel dépend notamment du revêtement sur lequel le pneumatique roule. Par exemple, un sol relativement lisse est plus favorable à l'émission du bruit des témoins qu'un sol poreux. Toutefois, la détection reste possible dans les deux cas. Il existe donc des revêtements favorables à la détection et d'autres moins favorables, ces deux types de revêtements pouvant se succéder aléatoirement. Ainsi, un premier indice local peut, pour un premier signal acoustique, être supérieur au seuil associé à l'indice local, puis un deuxième indice local, peut, pour un deuxième signal acoustique, ultérieur au premier, être inférieur audit seuil. Dans ce cas, on ne sait dire si le seuil d'usure radiale a été effectivement franchi et si le deuxième indice est inférieur au seuil en raison d'un revêtement peu favorable ou si le seuil d'usure radiale n'a pas été franchi et si le premier indice l'indique à tort.

Afin de réduire ce risque d'alerte à tort et de rendre plus robuste le procédé de détection, on traite plusieurs signaux acoustiques successifs temporellement. Si plusieurs séries d'empreinte acoustique de signaux acoustiques successifs présentent un indice de confiance local indiquant un dépassement du seuil d'usure radiale, il existe une grande probabilité que le seuil d'usure radiale ait effectivement été franchi ce qui est indiqué par l'indice de confiance global.

Dans un autre mode de réalisation du procédé:
- on acquiert plusieurs signaux acoustiques successifs dans le temps et susceptibles de comprendre le bruit d'empreinte acoustique, chaque signal acoustique comprenant plusieurs composantes fréquentielles élémentaires;
- pour chaque signal acoustique, on sélectionne une série d'empreinte acoustique,
- on détermine un indice de confiance, dit global, à partir d'une continuité dans le temps entre les composantes fréquentielles élémentaires de chaque série d'empreinte acoustique sélectionnée,
- si l'indice de confiance global est, en valeur absolue, supérieur ou inférieur à un seuil prédéterminé associé à cet indice de confiance global, on émet une alerte de l'usure du pneumatique.

Dans ce mode de réalisation, on réduit également le risque d'alerte à tord. L'indice de confiance global est déterminé à partir de la représentation graphique, indépendante des indices de confiance locaux, à la différence du mode de réalisation précédent dans lequel l'indice de confiance global est fonction des indices de confiance locaux. Ainsi, on s'assure de la détection correcte de l'usure du pneumatique au moyen d'indices de confiance locaux et global n'ayant pas de relation l'un avec l'autre ce qui rend le procédé plus robuste.

L'invention a également pour objet un programme d'ordinateur, caractérisé en ce qu'il comprend des instructions de code aptes à commander l'exécution des étapes du procédé tel que défini ci-dessus lorsqu'il est exécuté sur un ordinateur.

L'invention concerne aussi un support d'enregistrement de données comprenant, sous forme enregistrée, un programme tel que défini ci-dessus.

L'invention a pour autre objet une mise à disposition d'un programme tel que défini ci-dessus sur un réseau de télécommunication en vue de son téléchargement.

L'invention sera mieux comprise à la lecture de la description qui va suivre, donnée uniquement à titre d'exemple non limitatif et faite en se référant aux dessins dans lesquels :
- la figure 1 illustre une bande de roulement d'un pneumatique neuf,
- la figure 2 illustre une bande de roulement du pneumatique de la figure 1, dans un état usé;
- les figures 3A-3C et 4A-4C illustrent des signaux théoriques de modélisation du bruit émis par des témoins d'usure sonores du pneumatique des figures 1 et 2;
- la figure 5 est un schéma des étapes du procédé selon un premier mode de réalisation de l'invention;
- les figures 6 à 10 illustrent des signaux acoustiques du bruit à l'intérieur d'un habitacle d'un véhicule chaussé de pneumatiques des figures 1 et 2;
- les figures 11 à 13 illustrent des variations d'indices de pertinence en fonction de caractéristiques;
- les figures 14 et 15 illustrent une étape supplémentaire d'un procédé selon un deuxième mode de réalisation du procédé;
- la figure 16 illustre plusieurs trames de signaux acoustiques mesurés successivement conformément à des troisième et quatrième modes de réalisation du procédé.

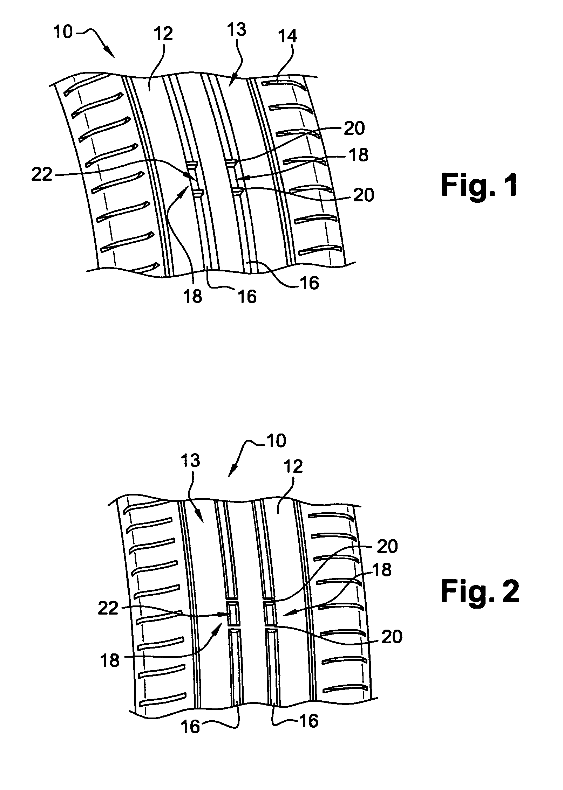

On a représenté sur les figures 1 et 2 un pneumatique désigné par la référence générale 10. Le pneumatique 10 comprend une bande de roulement 12 de forme sensiblement cylindrique, dont la surface externe 13 est munie de sculptures 14. En particulier, la bande de roulement 12 comprend deux sillons 16 circonférentiels et parallèles, creusés à la surface du pneumatique, de profondeur prédéterminée lorsque le pneumatique 10 est neuf. Par exemple, la profondeur de ces sillons 16 est de l'ordre de 8 mm pour un pneumatique de véhicule de tourisme et de 14 à 25 mm pour un pneumatique de véhicule poids lourd. Le pneumatique 10 comprend également des témoins d'usure sonores 18.

Chaque témoin d'usure sonore 18 comprend deux nervures 20 ménagées au fond des sillons 16 et s'étendant transversalement aux sillons 16. La hauteur des nervures 20 est prédéterminée lorsque le pneumatique est neuf. Par exemple, la hauteur de ces nervures est sensiblement égale à 1,6 mm. Chaque sillon 16 comprend quatre témoins 18 équi-répartis circonférentiellement le long de chaque sillon 16, deux témoins 18 de chaque sillon étant sensiblement alignés axialement. Ainsi, au total, la bande de roulement 12 comporte un ensemble de huit témoins d'usure sonore 18. En variante, le pneumatique peut comporter de 1 à 32 témoins 18.

Le volume défini par un sillon 16 et deux nervures voisines 20 forme une cavité 22 débouchant radialement vers l'extérieur du pneumatique 10.

Lorsque le pneumatique 10 est neuf, comme cela est représenté sur la figure 1, la hauteur des nervures 20 est plus petite que la profondeur des sillons 16 de sorte que deux cavités 22 voisines comprennent un passage de communication fluidique situé au-dessus des nervures 20. Ainsi, même lorsque la bande de roulement 12 est en contact avec un sol, le sol n'obture pas complètement les cavités 22 car le sommet des nervures 20 n'est pas en contact avec le sol. Dans ce cas, les différentes cavités 22 voisines sont en communication fluidique les unes avec les autres par un canal d'étranglement délimité par le sommet des nervures et le sol recouvrant les cavités 22.

On a représenté sur la figure 2 le pneumatique 10 de la figure 1 dans un état usé dans lequel la bande de roulement 12 a été progressivement arasée jusqu'à perdre quelques millimètres d'épaisseur radiale, de l'ordre de 5 mm.

En l'espèce, l'usure de la bande de roulement 12 du pneumatique 10 représentée sur la figure 2 est de l'ordre de 6 millimètres, c'est-à-dire supérieure à la distance séparant, lorsque le pneumatique est neuf, le sommet des nervures 20 de la surface 13. Compte tenu de cette usure prononcée, le sommet des nervures 20 est au même niveau que la surface 13. Ainsi, l'embouchure de chaque cavité 22 est définie par un contour sensiblement plan ménagé sur la bande de roulement 12 et les cavités 22 sont distinctes et séparées les unes des autres.

Chaque cavité 22 présente une longueur de l'ordre de 10 à 50 millimètres correspondant à l'écart circonférentiel entre deux nervures 20 adjacentes et une profondeur inférieure ou égale à la hauteur initiale de la nervure 18.

Ainsi, le volume total des cavités 22 est supérieur ou égal à 2 cm³, de préférence 5 cm³.

Du fait que l'embouchure de chaque cavité 20 est définie par un contour sensiblement plan, elle est apte à être obturée parfaitement et hermétiquement par un sol lisse et plan lors du roulage. En d'autres termes, lorsque le pneumatique 10 est usé, chaque cavité 22 est conformée de manière à être fermée par le sol de manière sensiblement étanche lors de son passage dans l'aire de contact du pneumatique 10 avec le sol.

Une telle cavité 20 formée à la surface de la bande de roulement 10 d'un pneumatique qui, d'une part, débouche radialement vers l'extérieur du pneumatique et, d'autre part, est conformée pour être fermée hermétiquement lors de son passage dans l'aire de contact, est qualifiée de "sonore".

Dans un pneumatique selon l'invention, de telles cavités sonores n'apparaissent que lorsque le pneumatique est usé au-delà d'un seuil d'usure radiale prédéterminée et sont inexistantes en deçà de ce seuil, notamment lorsque le pneumatique est neuf.

Au cours du roulage du pneumatique, une cavité sonore 22 donnée occupe successivement une position amont par rapport à l'aire de contact du pneumatique avec le sol dans laquelle elle est ouverte, puis une position localisée dans l'aire de contact dans laquelle elle est fermée car recouverte par le sol, puis enfin une position aval par rapport à l'aire de contact du pneumatique avec le sol dans laquelle elle est ouverte de nouveau et dans laquelle elle n'est plus recouverte par le sol.

En d'autres termes, la rotation du pneumatique provoque, pour une cavité donnée, l'admission d'air à l'intérieur de la cavité, la compression de l'air contenu dans la cavité lorsque celle-ci est fermée par le sol dans l'aire de contact, puis la détente de l'air contenu dans la cavité lors de l'ouverture de celle-ci par séparation de la bande de roulement 12 d'avec le sol.

Cette succession d'étapes d'admission/compression/détente est à l'origine d'un bruit caractéristique, parfois appelé chuintement ou bruit de pompage résultant de la détente de l'air comprimé contenu dans la cavité.

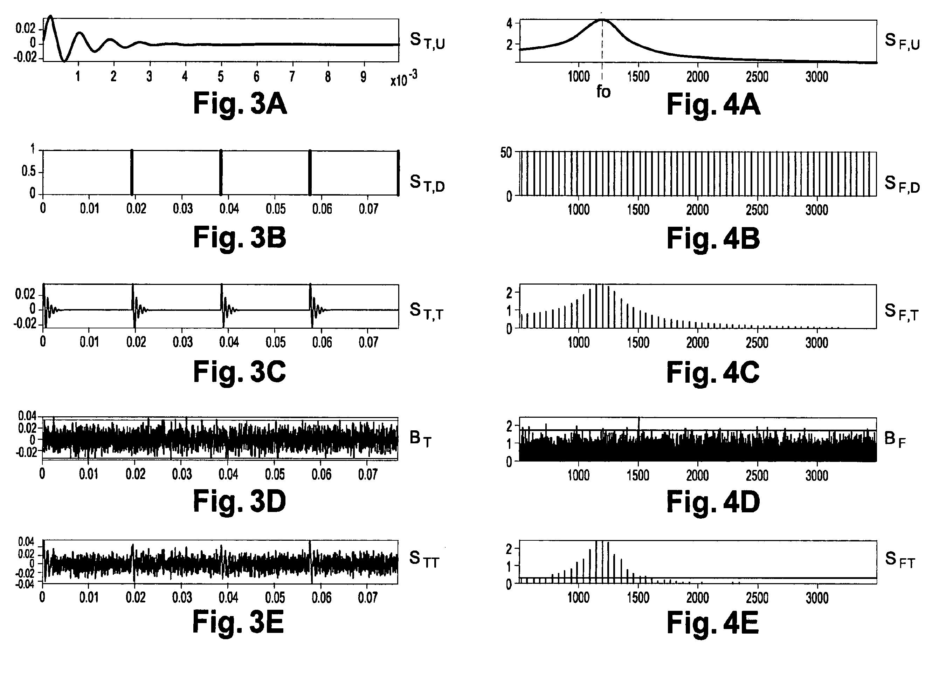

Nous allons maintenant expliquer le principe de détection du bruit de pompage émis par les témoins d'usure sonores 18 en référence aux figures 3A-E et 4A-E. Ces figures illustrent le bruit de pompage théorique du pneumatique de véhicule de tourisme usé de la figure 2 roulant à une vitesse sensiblement constante de 90 km/h.

Les figures 3A-3C illustrent des signaux théoriques dans le domaine temporel et les figures 4A-4C illustrent des signaux théoriques dans le domaine fréquentiel obtenus respectivement à partir de chaque signal 3A-3C par transformée de Fourier.

La figure 3A illustre un signal temporel S_{T,U}, appelé pulse, unitaire d'un témoin 18. Ce pulse représente l'amplitude (en Pa) du bruit émis par le témoin 18 et prend la forme d'une sinusoïde amortie présentant une fréquence propre f₀, une amplitude maximale a₀ et une durée caractéristique d'amortissement t₀. En l'espèce, f₀=1200 Hz, a₀=0,044 Pa et t₀=0,00 s.

Le signal unitaire fréquentiel S_{F,U} de la figure 4A prend la forme d'une gaussienne centrée sur la fréquence propre f₀. On notera que, plus le pulse unitaire est court, moins la sinusoïde oscille et plus le spectre de fréquences est large. A l'inverse, plus le pulse unitaire est long, plus la sinusoïde oscille et plus le spectre de fréquence est étroit. Ainsi, pour une sinusoïde parfaite non amortie, la transformée de Fourier de la figure 4A présenterait la forme d'un pic de Dirac de fréquence f₀.

La figure 3B illustre un signal temporel S_{T,D} de défilement des témoins 18 du pneumatique de la figure 2. Comme le pneumatique comporte quatre paires de témoins 18 répartis dans les deux sillons 16, le signal temporel de défilement prend la forme d'un peigne de Dirac de période T_{TUS} = 0,019 s et d'amplitude 1 comportant plusieurs pics correspondant au passage de chaque témoin 18 dans l'aire de contact.

Le signal fréquentiel de défilement S_{F,D} prend aussi la forme d'un peigne de Dirac caractérisé par des composantes fréquentielles élémentaires équiréparties, espacés d'un pas F_{TUS} = 1/T_{TUS} et d'amplitude F_{TUS} = 1/T_{TUS} = 52,2. On note que l'amplitude du signal fréquentiel S_{F,D} est très supérieure à l'amplitude du signal temporel S_{T,D}.

La figure 3C illustre un signal temporel total S_{T},_{T} des témoins 18 correspondant au produit de convolution du signal temporel unitaire S_{T,U} de la figure 3A et du signal temporel de défilement S_{T},_{D} de la figure 3B. Le signal temporel total S_{T},_{T} prend donc la forme d'une succession de sinusoïdes amorties d'amplitude maximale sensiblement égale à 0,044 Pa.

Le signal fréquentiel total S_{F},_{T} correspond au produit du signal fréquentiel unitaire S_{F,U} de la figure 4A et du signal fréquentiel de défilement S_{F,D} de la figure 4B. Le signal fréquentiel total S_{F},_{T} prend donc la forme du signal unitaire fréquentiel S_{F,U} échantillonné à la fréquence F_{TUS} et amplifié d'un facteur F_{TUS} par rapport au signal unitaire temporel S_{T,U}. Cette amplification provient de la conversion fréquentielle du signal temporel de défilement S_{T,D}. En l'espèce, l'amplitude du signal fréquentiel total S_{F,T} est sensiblement égale à 2,28 Pa.

En réalité, le signal total S_{T,T}, S_{F,T} des témoins 18 est couvert par un signal parasite B correspondant au bruit environnant. Le bruit B a été enregistré dans l'habitacle d'un véhicule BMW 318d roulant à 90 km/h muni de pneumatiques standards.

La figure 3D illustre un signal temporel B_{T} correspondant au bruit mesuré à l'intérieur de l'habitacle. L'amplitude maximale d'un tel bruit B_{T} est sensiblement égale à 0,034 Pa. L'amplitude maximale du signal fréquentiel B_{F} correspondant comme représenté à la figure 4D est sensiblement égale à 0,348 Pa.

La figure 3E illustre un signal temporel total STT correspondant à la superposition du signal temporel théorique total S_{T,T} de la figure 3C et du signal temporel correspondant au bruit B_{T} de la figure 3D. Le rapport signal sur bruit dans le domaine temporel est sensiblement égal à 1,04. La figure 4E illustre un signal fréquentiel total SFT correspondant à la superposition du signal fréquentiel théorique total S_{F,T} de la figure 4C et du signal fréquentiel B_{F} de la figure 4D correspondant au bruit mesuré. Le rapport signal sur bruit dans le domaine fréquentiel est sensiblement égal à 13,4.

L'analyse de ces signaux montre notamment l'intérêt de travailler avec des signaux dans le domaine fréquentiel car ils présentent un rapport signal sur bruit supérieur aux signaux dans le domaine temporel. La détection de l'usure et la fiabilité de cette détection sont ainsi fortement améliorées.

Le signal fréquentiel total SFT de la figure 4E présente plusieurs caractéristiques comprenant notamment le motif de répartition prédéterminé, le pas entre chaque pic égal à F_{TUS}, l'amplitude maximale A du signal et le nombre de composantes fréquentielles élémentaires N du signal.

F_{TUS} est fonction de la vitesse V du pneumatique 10, du nombre N_{TUS} de témoins 18 équi-répartis et de la circonférence C du pneumatique 10.

L'amplitude maximale A est fonction de la durée caractéristique d'amortissement t₀, du volume total V_{TUS} des cavités 22 et de la vitesse V du pneumatique 10. L'amplitude maximale A est également fonction de paramètres d'acquisition du signal temporel comprenant une fréquence d'échantillonnage Fe et une durée d'acquisition T du signal temporel.

Le nombre de composantes fréquentielles élémentaires N est fonction de la largeur de bande du pulse élémentaire de chaque témoin 18 qui dépend lui-même de la durée caractéristique d'amortissement t₀. N dépend également de la fréquence F_{TUS}, de l'interaction du signal total des témoins 18 et du signal correspondant au bruit et de la résolution fréquentielle Δf définie comme le rapport de la fréquence d'échantillonnage Fe sur la durée d'acquisition T.

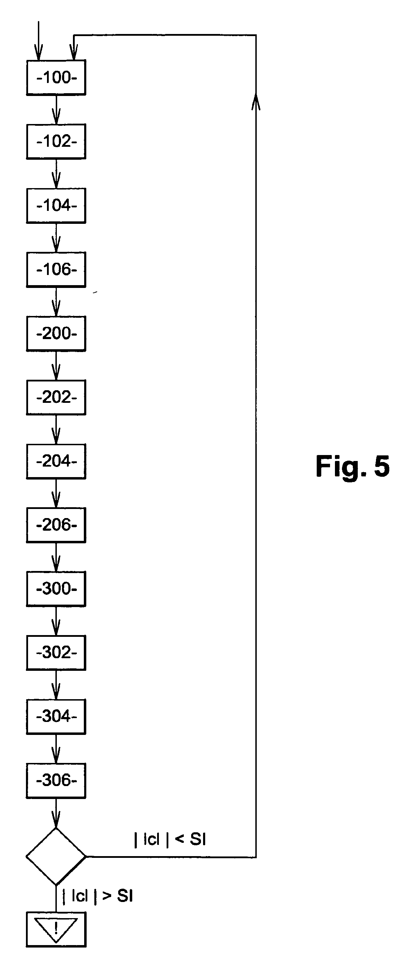

Nous allons maintenant décrire le procédé de détection selon l'invention en référence aux figures 5 à 11.

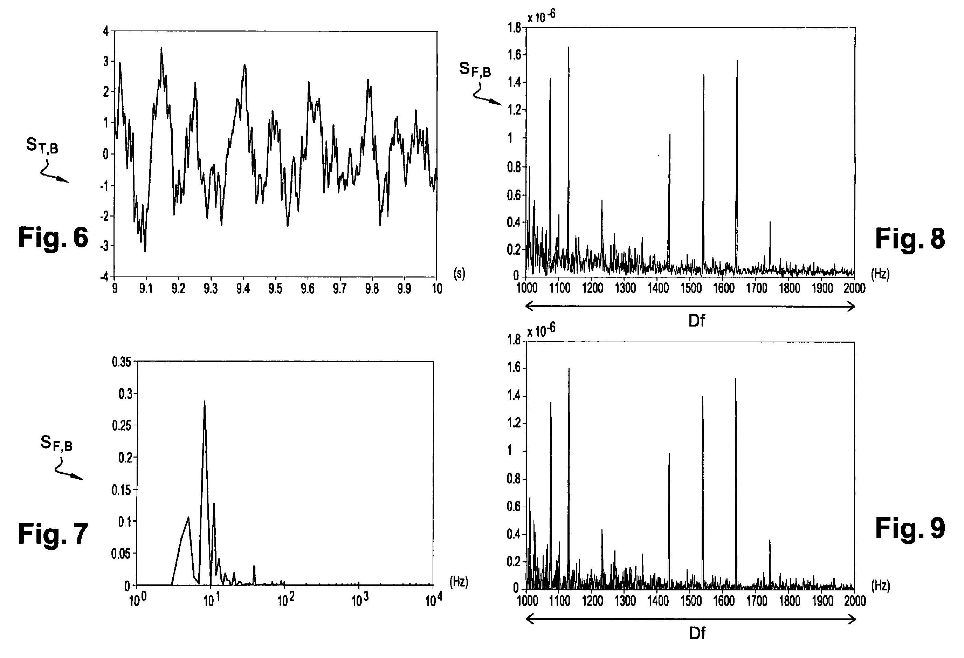

On a représenté sur la figure 6 un signal temporel total brut S_{T},_{B} d'un bruit acoustique mesuré dans l'habitacle d'un véhicule BMW 318d muni d'un pneumatique avant droit usé selon la figure 2. Les paramètres d'acquisition sont T=1s, Fe=8000 Hz. On ne connaît cependant pas les caractéristiques du pneumatique 10 telles que le nombre N_{TUS} de témoins 18, la circonférence C du pneumatique 10, le volume total V_{TUS} des cavités 22, ni la vitesse V du véhicule.

On acquiert lors d'une étape 100 un signal acoustique temporel brut S_{T},_{B} susceptible de comprendre le bruit d'empreinte acoustique S_{F},_{T}. On applique une transformée de Fourier au signal temporel total brut S_{T},_{B} afin d'obtenir un spectre fréquentiel total brut S_{F},_{B} représenté avec une échelle fréquentielle logarithmique sur la figure 7.

Dans les étapes optionnelles 102 à 106 ci-après, on identifie des composantes fréquentielles élémentaires du signal acoustique acquis.

Lors d'une étape 102, on isole alors un domaine fréquentiel Df du spectre brut S_{F,B} compris entre 500 et 2500 Hz, ici entre 1000 et 2000 Hz représenté avec une échelle fréquentielle linéaire sur la figure 8.

Puis, dans une étape 104, on élimine le bruit et on normalise optionnellement le spectre brut S_{F,B} dans le domaine fréquentiel Df. En l'espèce, on définit une courbe de filtrage passant par les minima du spectre brut S_{F,B}, puis on soustrait la courbe de filtrage au spectre brut S_{F,B}. On obtient alors le spectre filtré représenté sur la figure 9. Sur ce spectre filtré on peut éventuellement effectuer une normalisation.

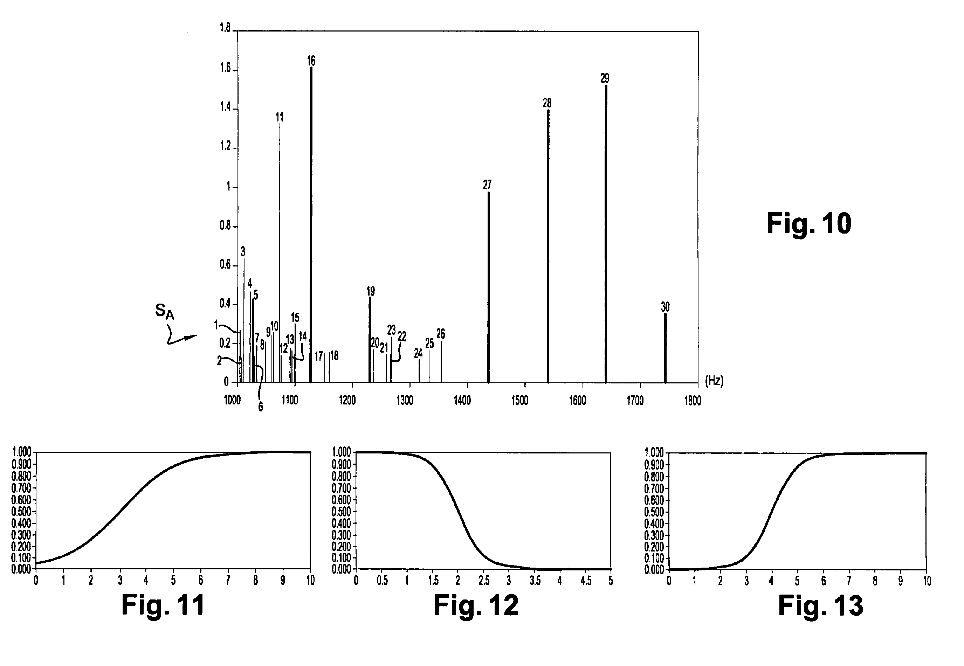

Enfin, dans une étape 106, on isole les composantes fréquentielles élémentaires du spectre filtré de la figure 9 présentant une intensité supérieure à un seuil d'intensité prédéterminé. Comme représenté sur la figure 10, on obtient ainsi un spectre net SA comprenant plusieurs composantes fréquentielles élémentaires. Le spectre net ou signal acoustique traité SA est donc obtenu à partir du signal temporel total brut S_{T},_{B} qui a été traité. En variante, les étapes de traitement peuvent ne pas avoir lieu ou bien d'autres étapes de filtrage supplémentaires sont mises en oeuvre.

Les étapes 100 à 106 sont également des étapes de traitement du signal S_{T},_{B}.

En l'espèce, le signal acoustique traité SA comprend 30 composantes fréquentielles élémentaires, numérotées de 1 à 30 sur la figure 10. Si le pneumatique est usé, les cavités sonores émettent un signal analogue au signal théorique illustré à la figure 4C. Afin de déterminer si le pneumatique est usé, c'est-à-dire si les cavités sonores 22 émettent le bruit de pompage, il convient donc de déterminer si le signal SA comporte un signal analogue au signal théorique S_{F},_{T} émis par les témoins 18 en l'absence de la connaissance des caractéristiques du pneumatique 10 telles que le nombre N_{TUS} de témoins 18, la circonférence C du pneumatique 10, le volume total V_{TUS} des cavités 22, et la vitesse V du véhicule.

On a vu que les caractéristiques indisponibles définissent un intervalle fréquentiel de référence I auquel la fréquence F_{TUS} est susceptible d'appartenir. Pour une gamme de pneumatiques de tourisme, dont la circonférence peut varier entre 1,3 m et 3 m, dont le nombre de témoins peut varier entre 1 et 10 et dont la vitesse du véhicule peut varier entre 10 km/h et 130 km/h, la fréquence F_{TUS} peut varier dans l'intervalle I compris entre 1 et 278 Hz. Pour des pneumatiques de type poids lourd, l'intervalle I est similaire.

En référence à la figure 10, lors d'une étape 200, on énumère tous les couples de composantes fréquentielles élémentaires du signal acoustique traité SA et on détermine un écart fréquentiel séparant les signaux de chaque couple l'un de l'autre. Pour 30 composantes fréquentielles élémentaires, on obtient alors 435 couples possibles. On ne retient que les couples pour lesquels l'écart fréquentiel les séparant appartient à l'intervalle I. Ainsi, seuls 317 couples présentent un écart fréquentiel compris dans l'intervalle 1-278 Hz. A titre d'exemple, on a représenté dans le tableau 1 ci-dessous 40 couples de composantes fréquentielles élémentaires parmi les 317 ainsi que les écarts fréquentiels correspondants.

**Tableau 1: Exemple de couples de composantes fréquentielles élémentaires et écarts fréquentiels correspondant**

| N° composante fréquentielle début | N° composante fréquentielle fin | Ecart fréquentiel (Hz) | N° composante fréquentielle début | N° composante fréquentielle fin | Ecart fréquentiel (Hz) |
|---|---|---|---|---|---|
| 4 | 5 | 4 | 22 | 28 | 271 |
| 4 | 6 | 6 | 23 | 24 | 47 |
| 4 | 7 | 12 | 23 | 25 | 64 |
| 4 | 8 | 28 | 23 | 26 | 85 |
| 4 | 9 | 38 | 23 | 27 | 166 |
| 4 | 10 | 41 | 23 | 28 | 269 |
| 4 | 11 | 52 | 24 | 25 | 17 |
| 4 | 12 | 54 | 24 | 26 | 38 |
| 4 | 13 | 70 | 24 | 27 | 119 |
| 4 | 14 | 73 | 24 | 28 | 222 |
| 4 | 15 | 78 | 25 | 26 | 21 |
| 4 | 16 | 106 | 25 | 27 | 102 |
| 4 | 17 | 131 | 25 | 28 | 205 |
| 4 | 18 | 139 | 26 | 27 | 81 |
| 4 | 19 | 209 | 26 | 28 | 184 |
| 4 | 20 | 215 | 27 | 28 | 103 |
| 4 | 21 | 238 | 27 | 29 | 205 |
| 4 | 22 | 246 | 28 | 29 | 102 |
| 4 | 23 | 248 | 28 | 30 | 205 |
| 5 | 6 | 2 | 29 | 30 | 103 |

Puis, dans une étape 202, on classe chaque écart fréquentiel de chaque couple de composantes fréquentielles élémentaires dans une famille, dite d'écart fréquentiel, définie par un intervalle d'écart fréquentiel familial σ_{F.} Chaque intervalle d'écart fréquentiel familial est compris dans l'intervalle I est est déterminé en fonction de l'intervalle I est d'une résolution fréquentielle Δf du signal acoustique SA. En l'espèce, on définit 26 familles d'écart fréquentiel dont les intervalles d'écart fréquentiel sont donnés dans le tableau 2 ci-dessous et tous inférieurs ou égaux à 4 Hz. En variante tous les intervalles σ_{F} sont inférieurs ou égaux à 2 Hz.

**Tableau 2: Familles d'écarts fréquentiels**

| N° famille | Borne inférieure de chaque intervalle d'écart fréquentiel familial σ_{F} (Hz) | Borne supérieure de chaque intervalle d'écart fréquentiel σ_{F} (Hz) |
|---|---|---|
| 1 | 2 | 6 |
| 2 | 8 | 12 |
| 3 | 13 | 17 |
| 4 | 18 | 22 |
| 5 | 23 | 26 |
| 6 | 28 | 32 |
| 7 | 33 | 37 |
| 8 | 38 | 42 |
| 9 | 45 | 49 |
| 10 | 50 | 54 |
| 11 | 55 | 58 |
| 12 | 61 | 65 |
| 13 | 66 | 70 |
| 14 | 76 | 80 |
| 15 | 81 | 85 |
| 16 | 86 | 90 |
| 17 | 102 | 106 |
| 18 | 115 | 119 |
| 19 | 165 | 168 |
| 20 | 202 | 206 |
| 21 | 207 | 211 |
| 22 | 225 | 229 |
| 23 | 232 | 236 |
| 24 | 238 | 242 |
| 25 | 254 | 258 |
| 26 | 260 | 263 |

Dans ce qui suit, nous allons uniquement décrire le traitement de famille n°17 lors d'une étape 204, le traitement des autres familles s'en déduisant *mutatis mutandis.* Parmi les 317 couples, on détermine les couples dont l'écart fréquentiel les séparant appartient à l'intervalle d'écart fréquentiel familial n°17, ici à l'intervalle 102-106 Hz, comme cela est illustré dans le tableau 3.

**Tableau 3: Couples de composantes fréquentielles élémentaires de la famille n°17**

| N° composante fréquentielle début | N° composante fréquentielle fin | Ecart fréquentiel sériel Es (Hz) | N° famille |
|---|---|---|---|
| 4 | 16 | 106 | 17 |
| 5 | 16 | 102 | 17 |
| 8 | 17 | 103 | 17 |
| 16 | 19 | 103 | 17 |
| 19 | 25 | 103 | 17 |
| 25 | 27 | 102 | 17 |
| 27 | 28 | 103 | 17 |
| 28 | 29 | 102 | 17 |
| 29 | 30 | 103 | 17 |

Puis, dans une étape 206, on énumère toutes les séries de composantes fréquentielles élémentaires comprenant au moins deux composantes fréquentielles élémentaires consécutives séparées par un écart Es fréquentiel, dit sériel, compris dans l'intervalle d'écart fréquentiel familial σ_{F}. Chaque série énumérée est susceptible de former au moins une partie des composantes fréquentielles élémentaires d'empreinte acoustique. Il s'agit en effet de reconstituer le peigne de Dirac caractéristique du signal total des témoins 18. Pour la famille n°17, on énumère donc 3 séries regroupées dans le tableau 4 ci-dessous. Chaque série énumérée comprend au moins deux composantes fréquentielles élémentaires espacés deux à deux d'un écart fréquentiel compris dans l'intervalle fréquentiel de référence I et plus précisément dans l'intervalle d'écart fréquentiel familial σ_{F}. Ainsi, chaque série d'empreinte acoustique est susceptible de représenter un signal théorique engendré par les témoins 18 avec différentes valeurs des caractéristiques inconnues que sont le nombre N_{TUS} de témoins 18, la circonférence C du pneumatique 10, le volume total V_{TUS} des cavités 22, et la vitesse V du véhicule.

**Tableau 4: Séries énumérées dans la famille 1**

| Numéro de série | Composantes fréquentielles élémentaires de la série |
|---|---|
| 1 | 4-16-19-25-27-28-29-30 |
| 2 | 5-16-19-25-27-28-29-30 |
| 3 | 8-17 |

Les étapes 200 à 206 sont des étapes permettant l'énumération des séries de composantes fréquentielles élémentaires.

Ensuite, dans une étape 300, pour chaque famille, on détermine un indice sériel Is de confiance de chaque série énumérée en fonction de premières caractéristiques prédéterminées. Ces premières caractéristiques prédéterminées comprennent une dispersion D_{E} de l'écart fréquentiel entre les composantes fréquentielles élémentaires de la série, un rapport R entre le signal acoustique et le bruit, le nombre N_{S} de composantes fréquentielles élémentaires dans la série et la densité D de la série, c'est-à-dire le rapport du nombre total de composantes fréquentielles élémentaires sur le nombre maximum de composantes fréquentielles élémentaires possibles. En l'espèce, pour la série n°2, DE = 0.5, R = 13,4, N_{S}= 8, D = 100%

Puis, dans une étape 302, on calcule l'indice Is comme un barycentre de R, D, N_{S} et D_{E}. On calcule l'indice Is de chaque série de chaque famille. Puis, on compare les indices Is de chaque série énumérée de chaque famille. Ici, plus l'indice Is est élevé, plus la série correspondante est susceptible de représenter le signal théorique recherché. On sélectionne alors la série d'empreinte acoustique ayant l'indice Is le plus élevé. En l'espèce, la série n°2 de la famille n°17 possède l'indice Is = 0.994 le plus élevé des trois séries identifiées.

En variante, après le calcul de l'indice Is de chaque série énumérée de chaque famille, on sélectionne une série dans chacune des 26 familles en fonction des premières caractéristiques prédéterminées. On obtient donc 26 séries sélectionnées. Puis, pour chaque série sélectionnée dans chaque famille, on détermine un indice familial If en fonction de deuxièmes caractéristiques prédéterminées de chaque série sélectionnée. Les premières et les deuxièmes caractéristiques peuvent êtres identiques ou différentes. Enfin, on sélectionne la série d'empreinte acoustique en comparant chaque indice familial If des 26 séries sélectionnées.

Bien que la série d'empreinte acoustique n°2 de la famille n°17 soit celle la plus susceptible de constituer celle correspondant au bruit émis par les témoins parmi toutes les séries énumérées, il n'est pas exclu que les premières caractéristiques de cette série restent insuffisantes pour émettre une alerte de l'usure du pneumatique.

Ainsi, dans une étape 304, on détermine un indice de pertinence Ip de chaque première caractéristique, en l'espèce du rapport R (figure 11), de la dispersion D_{E} de l'écart fréquentiel (figure 12) du nombre N_{S} de composantes fréquentielles élémentaires dans la série (figure 13) et de la densité D de la série. Sur ces figures, chaque indice de pertinence est défini par une fonction variable de type sigmoïde de chaque première caractéristique. Par exemple, pour une série d'empreinte acoustique présentant un rapport R=7, l'indice de pertinence Ip associé à N est égal à 0,98. Pour une série d'empreinte acoustique présentant une dispersion DE=1,5, l'indice de pertinence Ip associé à D_{E} est égal à 0,9. Pour une série d'empreinte acoustique comprenant N_{S}=4 composantes fréquentielles élémentaires, l'indice de pertinence Ip associé à N_{S} est égal à 0,5.

Ensuite, lors d'une étape 306, on calcule un indice de confiance Icl local à partir des indices Ip. L'indice Ic est égal au produit des indices Ip. En variante, Icl est égal à une moyenne arithmétique ou pondérée des indices Ip.

Les étapes 300 à 302 sont des étapes de sélection de la série d'empreinte acoustique.

Les étapes 304 à 306 sont des étapes de calcul d'indices permettant de ne pas émettre d'alerte à tort.

Si l'indice de confiance Icl est supérieur, en valeur absolue, à un seuil local prédéterminé SI associé à l'indice Icl, en l'espèce 0,99, on émet une alerte de l'usure du pneumatique 10.

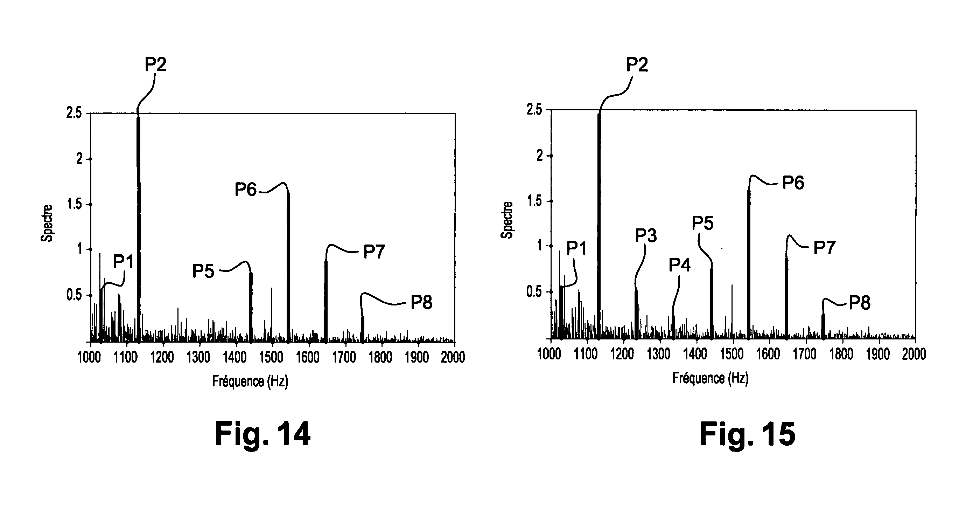

On va maintenant décrire un procédé selon un deuxième mode de réalisation en référence aux figures 14 et 15.

Dans ce mode de réalisation, on effectue une étape de reconstitution des séries avant l'étape de détermination de l'indice Is et après l'étape d'énumération des séries dans chaque famille. En effet, il se peut que des signaux d'une série non énumérée aient été altérés, par exemple en raison de conditions anormales de mesure. Ainsi, une série, qui aurait, dans des conditions normales de mesure, été énumérée et compris huit composantes fréquentielles élémentaires P1-P8 comme représenté sur la figure 15 a été scindé en deux séries comprenant respectivement les composantes fréquentielles élémentaires P1-P2 et les composantes fréquentielles élémentaires P5-P8 comme représenté sur la figure 14. Les composantes fréquentielles élémentaires P3 et P4 n'ont pas été détectés. Afin de reconstituer la série entière, après l'étape d'énumération des séries dans chaque famille, on recherche au moins un signal distant d'un des signaux de la série d'un écart fréquentiel multiple de l'intervalle d'écart fréquentiel familial σ_{F}. On trouve que le pic P5 est distant de P1 et P2 d'un écart sensiblement égal à respectivement quatre et trois fois l'intervalle d'écart fréquentiel familial σ_{F}. Ainsi, on complète la série énumérée constituée des composantes fréquentielles élémentaires P1-P2 par les signaux de la série constituée des composantes fréquentielles élémentaires P5-P8 qui sont distants d'un des signaux P1-P2 d'un écart fréquentiel multiple de l'écart fréquentiel familial σ_{F}.

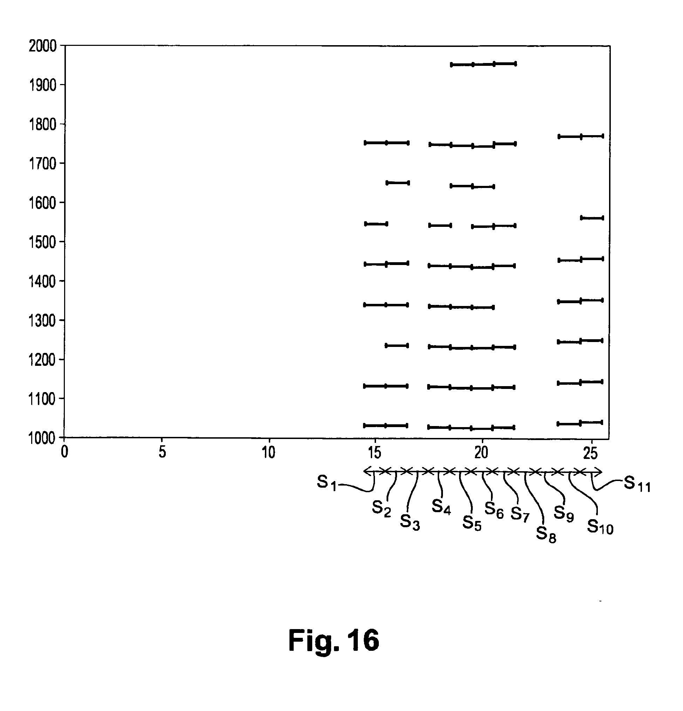

On va maintenant décrire un procédé selon un troisième mode de réalisation en référence à la figure 16.

A la différence du premier mode de réalisation, on n'émet pas d'alerte lorsque l'indice de confiance local Icl est supérieur au seuil local SI. En effet, on isole dans le domaine fréquentiel plusieurs signaux acoustiques successifs. Pour chaque signal acoustique, on sélectionne une série d'empreinte acoustique. On représente graphiquement, comme sur la figure 16, les signaux des séries d'empreinte acoustique S1-S11 sélectionnées à partir des signaux acoustiques successifs en fonction du temps. On notera que les séries S3, S8 et S9 n'apparaissent pas. Ceci peut être dû aux bruits parasites par exemple. Les petits décalages en fréquence d'une série à l'autre sont dus aux faibles variations de la vitesse qui change la fréquence F_{TUS} séparant deux composantes fréquentielles élémentaires adjacents de chaque série d'empreinte acoustique.

On détermine un indice de confiance global Icg à partir d'une continuité dans le temps des signaux des séries d'empreinte acoustique. Ici, on compare la position des signaux d'une série avec les signaux de la série suivante. En variante, on utilise la représentation graphique des signaux, par exemple au moyen d'algorithmes de reconnaissance d'images. Si l'indice Icg est supérieur, en valeur absolue, à un seuil global Sg prédéterminé associé à cet indice global Icg, on émet une alerte de l'usure du pneumatique.

On va maintenant décrire un procédé selon un quatrième mode de réalisation.

Comme dans le troisième mode de réalisation, on n'émet pas d'alerte lorsque l'indice de confiance local Icl est supérieur au seuil local SI. En effet, on isole dans le domaine fréquentiel plusieurs signaux acoustiques successifs. Pour chaque signal acoustique, on sélectionne une série d'empreinte acoustique. Puis, on détermine l'indice de confiance local Icl correspondant à chaque signal acoustique. On détermine un indice de confiance global Icg à partir de ces indices locaux Icl, par exemple par une moyenne glissante des 5 derniers indices locaux. Si l'indice Icg est supérieur, en valeur absolue, à un seuil global Sg prédéterminé associé à cet indice global Icg, on émet une alerte de l'usure du pneumatique.

L'invention ne se limite pas aux modes de réalisations décrits ci-dessus.

En effet, le procédé selon l'invention peut être également mis en oeuvre en connaissant tout ou partie des paramètres du pneumatique déterminant la fréquence F_{TUS}. Ainsi, en connaissant le nombre N_{TUS} de témoins 18, notamment parce que tous les pneumatiques comportant ce type de témoins 18 en comporte un nombre identique, la circonférence C du pneumatique 10 et la vitesse V du pneumatique 10, par exemple à partir d'un GPS (Global Positionning System), on réduit l'intervalle fréquentiel de référence et on améliore la robustesse de la détection. Par exemple, en connaissant la vitesse V=90 km/h avec une précision de ± 5 km/h d'un pneumatique de circonférence C=1,927 m comportant N_{TUS}=4, l'intervalle fréquentiel de référence est compris entre 49 Hz et 55 Hz. Le peigne est donc d'autant plus unique et facile à détecter que les paramètres du pneumatique sont connus avec précision.

Tout ou partie du procédé selon l'invention pourra être mis en oeuvre par le biais d'instructions de code aptes à commander l'exécution des étapes du procédé lorsqu'il est exécuté sur un ordinateur. Les instructions pourront émaner de programmes d'ordinateur enregistrés sur un support d'enregistrement de données par exemple du type à disque dur ou à mémoire flash, CD ou DVD. On pourra prévoir de mettre un tel programme à disposition en vue de son téléchargement sur un réseau de télécommunication tel que le réseau Internet ou un réseau sans fil. Des mises à jour du programme pourront ainsi être envoyées par ce réseau aux ordinateurs connectés au réseau.

## Revendications

1. Procédé de détection de l'usure d'un pneumatique (10) comportant un ensemble d'au moins un témoin (18) d'usure sonore émettant à partir d'un seuil d'usure radial prédéterminé un bruit d'empreinte acoustique (SFT) comportant plusieurs composantes fréquentielles élémentaires d'empreinte acoustique, ledit procédé comportant les étapes suivantes :
- on acquiert (100) un signal acoustique (S_{F,B}) susceptible de comprendre le bruit d'empreinte acoustique (SFT), le signal acoustique (S_{F,B}) comprenant plusieurs composantes fréquentielles élémentaires ;
- on identifie des composantes fréquentielles du signal acoustique acquis ;
- on énumère (206) plusieurs séries de composantes fréquentielles élémentaires, chaque série énumérée étant susceptible de former au moins une partie des composantes fréquentielles élémentaires d'empreinte acoustique ;
- on sélectionne (302), parmi les séries énumérées, une série, appelée série d'empreinte acoustique ;
- on détermine (306) un indice de confiance (Icl), dit local, de la série d'empreinte acoustique ;
- si un indice de confiance (Ici, Icg) déterminé à partir de l'indiée de confiance local (Icl) est, en valeur absolue, supérieur ou inférieur à un seuil (SI, Sg) prédéterminé associé à cet indice de confiance (Icl, Icg) déterminé à partir de l'indice de confiance local, on émet une alerte de l'usure du pneumatique (10).

2. Procédé selon la revendication 1, dans lequel les témoins d'usure sonores sont équi-répartis circonférentiellement dans une bande de roulement du pneumatique.

3. Procédé selon l'une quelconque des revendications précédentes, dans lequel la série d'empreinte acoustique forme au moins une partie d'un peigne de Dirac.

4. Procédé selon l'une quelconque des revendications précédentes, dans lequel l'ensemble (10) comprend de 1 à 32 et préférentiellement de 1 à 12 témoins (18).

5. Procédé selon l'une quelconque des revendications précédentes, dans lequel chaque témoin (18) comprend une cavité (22) sonore conformée de sorte que, au-delà d'un seuil d'usure radiale prédéterminé, la cavité (22) débouche radialement vers l'extérieur du pneumatique (10) et est conformée de manière à être fermée par le sol de manière sensiblement étanche lors de son passage dans l'aire du contact du pneumatique (10) avec le sol, le volume total de la ou des cavités (22) étant supérieur ou égal à 2 cm³, de préférence 5 cm³.

6. Procédé selon l'une quelconque des revendications précédentes, dans lequel, on traite le signal acoustique acquis (S_{F,B}) en mettant en oeuvre au moins l'une des étapes suivantes :
- on détermine (100) le spectre fréquentiel (SF) du signal acoustique acquis (S_{F,B}) ;
- on isole (102) un domaine fréquentiel (Df) du spectre fréquentiel (SF) du signal acoustique acquis (S_{F,B}) compris entre 500 et 2500 Hz ;
- on isole (106) des composantes fréquentielles élémentaires du spectre fréquentiel (SF) du signal acoustique acquis (S_{F,B}) présentant un niveau supérieur à un seuil prédéterminé.

7. Procédé selon l'une quelconque des revendications précédentes, dans lequel, on sélectionne (206) au moins une série d'au moins deux composantes fréquentielles élémentaires, chaque composante fréquentielle élémentaire de la série étant distante d'au moins une composante fréquentielle élémentaire adjacente de la série d'un écart fréquentiel (Es) compris dans un intervalle (I) fréquentiel de référence prédéterminé.

8. Procédé selon la revendication précédente, dans lequel l'intervalle (I) fréquentiel de référence prédéterminé est compris entre 1 et 300 Hz.

9. Procédé selon l'une quelconque des revendications précédentes, dans lequel, on énumère (200) tous les couples de composantes fréquentielles élémentaires et on détermine un écart fréquentiel séparant les composantes fréquentielles élémentaires de chaque couple l'un de l'autre.

10. Procédé selon la revendication précédente, dans lequel on classe (202) chaque écart fréquentiel de chaque couple de composantes fréquentielles élémentaires dans une famille, dite d'écart fréquentiel, définie par un intervalle (σ_{F}) d'écart fréquentiel familial.

11. Procédé selon les revendications 7 et 10 prises ensemble, dans lequel on détermine chaque intervalle (σ_{F}) d'écart fréquentiel familial en fonction de l'intervalle (I) fréquentiel de référence prédéterminé et d'une résolution (Δf) fréquentielle du spectre fréquentiel (SF) du signal acoustique acquis (S_{F,B}).

12. Procédé selon la revendication 10 ou 11, dans lequel, dans chaque famille, on énumère toutes les séries de composantes fréquentielles élémentaires comprenant au moins deux composantes fréquentielles élémentaires consécutives séparées par un écart (Es) fréquentiel, dit sériel, compris dans l'intervalle (σ_{F}) d'écart fréquentiel familial.

13. Procédé selon la revendication précédente, dans lequel, pour chaque série de composantes fréquentielles élémentaires énumérée :
- on recherche au moins une composante fréquentielle élémentaire distante d'une des composantes fréquentielles élémentaires de la série d'un écart fréquentiel multiple de l'intervalle (σ_{F}) d'écart fréquentiel familial ; et
- on complète chaque série énumérée par la ou les composantes fréquentielles élémentaires distantes d'une des composantes fréquentielles élémentaires de la série d'un écart fréquentiel multiple de l'intervalle (σ_{F}) écart fréquentiel familial.

14. Procédé selon la revendication 12 ou 13, dans lequel, pour chaque famille, on détermine (300) un indice sériel (Is) de chaque série énumérée en fonction d'au moins une première caractéristique prédéterminée (R, D, N_{S}, D_{E}) de la série.

15. Procédé selon la revendication précédente, dans lequel:
- on sélectionne (302) une série en comparant chaque indice sériel (Is) des séries énumérées ;
- pour chaque série sélectionnée, on détermine un indice familial (If) de la série sélectionnée dans chaque famille, en fonction d'au moins une deuxième caractéristique prédéterminée (R, D, N_{S}, D_{E}) de la série sélectionnée ; et
- on sélectionne la série d'empreinte acoustique en comparant chaque indice familial (If) des séries sélectionnées.

16. Procédé selon la revendication 14, dans lequel, on sélectionne la série d'empreinte acoustique en comparant chaque indice sériel (Is) de chaque série sélectionnée de chaque famille.

17. Procédé selon l'une quelconque des revendications 14 à 16, dans lequel on détermine (304) un indice de pertinence (Ip) de chaque première et/ou deuxième caractéristique (R, D, N_{S}, DE), chaque indice de pertinence (Ip) étant défini par une fonction variable de type sigmoïde de chaque première et/ou chaque deuxième caractéristique (R, D, N_{S}, D_{E}).

18. Procédé selon la revendication 17, dans lequel on détermine (306) l'indice (Icl) de confiance local à partir du ou des indices de pertinence (Ip) respectivement de chaque première et/ou deuxième caractéristique (R, D, N_{S}, D_{E}).

19. Procédé selon l'une quelconque des revendications 14 à 18, dans lequel la ou les premières et/ou deuxièmes caractéristiques prédéterminées comprennent un rapport fréquentiel (R) signal/bruit et/ou le nombre (N_{S}) de composantes fréquentielles élémentaires dans la série et/ou une dispersion (DE) de l'écart fréquentiel entre les composantes fréquentielles élémentaires de la série et/ou la densité (D) des composantes fréquentielles élémentaires de la série.

20. Procédé selon l'une quelconque des revendications précédentes, dans lequel :
- on acquiert plusieurs signaux acoustiques (S_{F,B}) successifs dans le temps et susceptibles de comprendre le bruit d'empreinte acoustique (SFT), chaque signal acoustique (S_{F},_{B}) comprenant plusieurs composantes fréquentielles élémentaires ;
- pour chaque signal acoustique (S_{F,B}), on sélectionne une série (S1-S11) d'empreinte acoustique et on détermine un indice de confiance local (Icl) de la série (S1-S11) d'empreinte acoustique sélectionnée ;
- on détermine un indice (Icg) de confiance, dit global, à partir des indices (Icl) de confiance locaux des séries d'empreinte acoustique (S1-S11),
- si l'indice (Icg) de confiance global est, en valeur absolue, supérieur ou inférieur à un seuil prédéterminé (Sg) associé à cet indice (Icg) de confiance global, on émet une alerte de l'usure du pneumatique (10).

21. Procédé selon l'une quelconque des revendications 1 à 19, dans lequel:
- on acquiert plusieurs signaux acoustiques (S_{F,B}) successifs dans le temps et susceptibles de comprendre le bruit d'empreinte acoustique (SFT), chaque signal acoustique (S_{F,B}) comprenant plusieurs composantes fréquentielles élémentaires ;
- pour chaque signal acoustique (S_{F,B}), on sélectionne une série d'empreinte acoustique (S1-S11),
- on détermine un indice (Icg) de confiance, dit global, à partir d'une continuité dans le temps entre les composantes fréquentielles élémentaires de chaque série (S1-S11) d'empreinte acoustique sélectionnée,
- si l'indice (Icg) de confiance global est, en valeur absolue, supérieur ou inférieur à un seuil prédéterminé (Sg) associé à cet indice (Icg) de confiance global, on émet une alerte de l'usure du pneumatique (10).

22. Programme d'ordinateur, **caractérisé en ce qu'**il comprend des instructions de code aptes à commander l'exécution des étapes du procédé selon l'une quelconque des revendications précédentes lorsqu'il est exécuté sur un ordinateur.

23. Support d'enregistrement de données comprenant, sous forme enregistrée, un programme selon la revendication précédente.

24. Mise à disposition d'un programme selon la revendication 22 sur un réseau de télécommunication en vue de son téléchargement.

## Patentansprüche

1. Verfahren zur Erfassung des Verschleißes eines Luftreifens (10), der eine Einheit aus mindestens einer akustischen Verschleißanzeige (18) aufweist, die ausgehend von einer vorbestimmten radialen Verschleißschwelle ein akustisches Fingerabdruckgeräusch (SFT) ausgibt, das mehrere elementare Frequenzkomponenten eines akustischen Fingerabdrucks aufweist, wobei das Verfahren die folgenden Schritte aufweist:
- es wird ein akustisches Signal (S_{F,B}) erfasst (100), das das akustische Fingerabdruckgeräusch (SFT) enthalten kann, wobei das akustische Signal (S_{F,B}) mehrere elementare Frequenzkomponenten enthält;
- es werden Frequenzkomponenten des erfassten akustischen Signals identifiziert;
- es werden mehrere Reihen von elementaren Frequenzkomponenten aufgezählt (206), wobei jede aufgezählte Reihe mindestens einen Teil der elementaren Frequenzkomponenten eines akustischen Fingerabdrucks formen kann;
- aus den aufgezählten Reihen wird eine akustische Fingerabdruckreihe genannte Reihe ausgewählt (302);
- es wird ein so genannter lokaler Vertrauensindex (Icl) der akustischen Fingerabdruckreihe bestimmt (306);
- wenn ein ausgehend vom lokalen Vertrauensindex (Icl) bestimmter Vertrauensindex (Icl, Icg) im Absolutwert höher oder niedriger ist als eine vorbestimmte Schwelle (Sl, Sg), die diesem ausgehend vom lokalen Vertrauensindex bestimmten Vertrauensindex (Icl, Icg) zugeordnet ist, wird eine Warnung des Verschleißes des Luftreifens (10) ausgegeben.

2. Verfahren nach Anspruch 1, wobei die akustischen Verschleißanzeigen in Umfangsrichtung in einem Laufstreifen des Luftreifens gleichmäßig verteilt sind.

3. Verfahren nach einem der vorhergehenden Ansprüche, wobei die akustische Fingerabdruckreihe mindestens einen Teil eines Dirac-Kamms formt.

4. Verfahren nach einem der vorhergehenden Ansprüche, wobei die Einheit (10) 1 bis 32 und vorzugsweise 1 bis 12 Anzeigen (18) enthält.

5. Verfahren nach einem der vorhergehenden Ansprüche, wobei jede Anzeige (18) einen Schallhohlraum (22) enthält, der so gestaltet ist, dass der Hohlraum (22) jenseits einer vorbestimmten radialen Verschleißschwelle radial zur Außenseite des Luftreifens (10) mündet, und so gestaltet ist, dass er bei seinem Durchgang durch den Kontaktbereich des Luftreifens (10) mit dem Boden vom Boden im Wesentlichen dicht verschlossen wird, wobei das Gesamtvolumen des Hohlraums oder der Hohlräume (22) größer als oder gleich 2 cm³, vorzugsweise 5 cm³, ist.

6. Verfahren nach einem der vorhergehenden Ansprüche, wobei das erfasste akustische Signal (S_{F},_{B}) verarbeitet wird, indem mindestens einer der folgenden Schritte angewendet wird:
- es wird das Frequenzspektrum (SF) des erfassten akustischen Signals (S_{F,B}) bestimmt (100);
- es wird ein Frequenzbereich (Df) des Frequenzspektrums (SF) des erfassten akustischen Signals (S_{F,B}) isoliert (102), der zwischen 500 und 2500 Hz liegt;
- es werden elementare Frequenzkomponenten des Frequenzspektrums (SF) des erfassten akustischen Signals (S_{F,B}) isoliert (106), die einen höheren Pegel als eine vorbestimmte Schwelle aufweisen.

7. Verfahren nach einem der vorhergehenden Ansprüche, wobei mindestens eine Reihe von mindestens zwei elementaren Frequenzkomponenten ausgewählt wird (206), wobei jede elementare Frequenzkomponente der Reihe von mindestens einer benachbarten elementare Frequenzkomponente der Reihe um einen Frequenzabstand (Es) beabstandet ist, der in einem vorbestimmten Bezugsfrequenzintervall (I) liegt.

8. Verfahren nach dem vorhergehenden Anspruch, wobei das vorbestimmte Bezugsfrequenzintervall (I) zwischen 1 und 300 Hz liegt.

9. Verfahren nach einem der vorhergehenden Ansprüche, wobei alle Paare von elementaren Frequenzkomponenten aufgezählt werden (200) und ein Frequenzabstand bestimmt wird, der die elementaren Frequenzkomponenten jedes Paars voneinander trennt.

10. Verfahren nach dem vorhergehenden Anspruch, wobei jeder Frequenzabstand jedes Paars von elementaren Frequenzkomponenten in einer so genannten Frequenzabstandsfamilie eingeordnet wird (202), die durch ein Familien-Frequenzabstandsintervall (σ_{F}) definiert wird.

11. Verfahren nach den Ansprüchen 7 und 10 zusammen genommen, wobei jedes Familien-Frequenzabstandsintervall (σ_{F}) abhängig vom vorbestimmten Bezugsfrequenzintervall (I) und von einer Frequenzauflösung (Δf) des Frequenzspektrums (SF) des erfassten akustischen Signals (S_{F,B}) bestimmt wird.

12. Verfahren nach Anspruch 10 oder 11, wobei in jeder Familie alle Reihen von elementaren Frequenzkomponenten aufgezählt werden, die mindestens zwei durch einen im Familien-Frequenzabstandsintervall (σ_{F}) enthaltenen so genannten Reihen-Frequenzabstand (Es) getrennte aufeinanderfolgende elementare Frequenzkomponenten enthalten.

13. Verfahren nach dem vorhergehenden Anspruch, wobei für jede aufgezählte Reihe von elementaren Frequenzkomponenten:
- mindestens eine elementare Frequenzkomponente gesucht wird, die von einer der elementaren Frequenzkomponenten der Reihe um einen Frequenzabstand beabstandet ist, der ein Vielfaches des Familien-Frequenzabstandsintervalls (σ_{F}) ist; und
- jede aufgezählte Reihe durch die elementaren Frequenzkomponenten vervollständigt wird, die von einer der elementaren Frequenzkomponenten der Reihe um einen Frequenzabstand beabstandet sind, der ein Vielfaches des Familien-Frequenzabstandsintervalls (σ_{F}) ist.

14. Verfahren nach Anspruch 12 oder 13, wobei für jede Familie ein Reihenindex (Is) jeder aufgezählten Reihe abhängig von mindestens einem ersten vorbestimmten Merkmal (R, D, N_{S}, D_{E}) der Reihe bestimmt wird (300).

15. Verfahren nach dem vorhergehenden Anspruch, wobei:
- eine Reihe ausgewählt wird (302), indem jeder Reihenindex (Is) der aufgezählten Reihen verglichen wird;
- für jede ausgewählte Reihe ein Familienindex (If) der in jeder Familie ausgewählten Reihe abhängig von mindestens einem zweiten vorbestimmten Merkmal (R, D, N_{S}, D_{E}) der ausgewählten Reihe bestimmt wird; und
- die akustische Fingerabdruckreihe ausgewählt wird, indem jeder Familienindex (If) der ausgewählten Reihen verglichen wird.

16. Verfahren nach Anspruch 14, wobei die akustische Fingerabdruckreihe ausgewählt wird, indem jeder Reihenindex (Is) jeder ausgewählten Reihe jeder Familie verglichen wird.

17. Verfahren nach einem der Ansprüche 14 bis 16, wobei ein Relevanzindex (Ip) jedes ersten und/oder zweiten Merkmals (R, D, N_{S}, D_{E}) bestimmt wird (304), wobei jeder Relevanzindex (Ip) durch eine variable Funktion vom sigmoidalen Typ jedes ersten und/oder jedes zweiten Merkmals (R, D, N_{S}, D_{E}) definiert wird.

18. Verfahren nach Anspruch 17, wobei der lokale Vertrauensindex (Icl) ausgehend von dem Relevanzindex oder den Relevanzindices (Ip) jedes ersten und/oder jedes zweiten Merkmals (R, D, N_{S}, D_{E}) bestimmt wird (306).

19. Verfahren nach einem der Ansprüche 14 bis 18, wobei das oder die vorbestimmte(n) erste und/oder zweite Merkmal(e) ein Signal/Rausch-Frequenzverhältnis (R) und/oder die Anzahl (N_{S}) von elementaren Frequenzkomponenten in der Reihe und/oder eine Streuung (D_{E}) des Frequenzabstands zwischen den elementaren Frequenzkomponenten der Reihe und/oder die Dichte (D) der elementaren Frequenzkomponenten der Reihe enthält(enthalten).

20. Verfahren nach einem der vorhergehenden Ansprüche, wobei:
- mehrere zeitlich aufeinanderfolgende akustische Signale (S_{F,B}), die das akustische Fingerabdruckgeräusch (SFT) enthalten können, erfasst werden, wobei jedes akustische Signal (S_{F,B}) mehrere elementare Frequenzkomponenten enthält;
- für jedes akustische Signal (S_{F,B}) eine akustische Fingerabdruckreihe (S1-S11) ausgewählt wird, und ein lokaler Vertrauensindex (Icl) der ausgewählten akustischen Fingerabdruckreihe (S1-S11) bestimmt wird;
- ein so genannter globaler Vertrauensindex (Icg) ausgehend von den lokalen Vertrauensindices (Icl) der akustischen Fingerabdruckreihen (S1-S11) bestimmt wird,
- wenn der globale Vertrauensindex (Icg) im Absolutwert höher oder niedriger als eine diesem globalen Vertrauensindex (Icg) zugeordnete vorbestimmte Schwelle (Sg) ist, eine Warnung über den Verschleiß des Luftreifens (10) ausgegeben wird.

21. Verfahren nach einem der Ansprüche 1 bis 19, wobei:
- mehrere zeitlich aufeinanderfolgende akustische Signale (S_{F,B}), die das akustische Fingerabdruckgeräusch (SFT) enthalten können, erfasst werden, wobei jedes akustische Signal (S_{F,B}) mehrere elementare Frequenzkomponenten enthält;
- für jedes akustische Signal (S_{F,B}) eine akustische Fingerabdruckreihe (S1-S11) ausgewählt wird,
- ein so genannter globaler Vertrauensindex (Icg) ausgehend von einer zeitlichen Kontinuität zwischen den elementaren Frequenzkomponenten jeder ausgewählten akustischen Fingerabdruckreihe (S1-S11) bestimmt wird,
- wenn der globale Vertrauensindex (Icg) im Absolutwert höher oder niedriger als eine diesem globalen Vertrauensindex (Icg) zugeordnete vorbestimmte Schwelle (Sg) ist, eine Warnung über den Verschleiß des Luftreifens (10) ausgegeben wird.

22. Computerprogramm, **dadurch gekennzeichnet, dass** es Codeanweisungen enthält, die die Ausführung der Schritte des Verfahrens nach einem der vorhergehenden Ansprüche steuern können, wenn es in einem Computer ausgeführt wird.

23. Datenspeicherträger, der in gespeicherter Form ein Programm nach dem vorhergehenden Anspruch enthält.

24. Bereitstellung eines Programms nach Anspruch 22 in einem Telekommunikationsnetz für sein Herunterladen.

## Claims

1. Method for detecting the wear of a tyre (10) comprising a set of at least one sonic wear gauge (18) emitting on the basis of a predetermined radial wear threshold an acoustic footprint noise (SFT) comprising several acoustic footprint elementary frequency components, said method comprising the following steps:
- an acoustic signal (S_{F,B}) liable to comprise the acoustic footprint noise (SFT) is acquired (100), the acoustic signal (S_{F,B}) comprising several elementary frequency components;
- frequency components of the acquired acoustic signal are identified;
- several series of elementary frequency components are enumerated (206), each enumerated series being liable to form at least some part of the acoustic footprint elementary frequency components;
- a series, called the acoustic footprint series, is selected (302) from among the enumerated series;
- a so-called local confidence index (Icl) of the acoustic footprint series is determined (306);
- if a confidence index (Icl, Icg) determined on the basis of the local confidence index (Icl) is, in absolute value, greater or less than a predetermined threshold (Sl, Sg) associated with this confidence index (Icl, Icg) determined on the basis of the local confidence index, an alert of the wear of the tyre (10) is emitted.

2. Method according to Claim 1, in which the sonic wear gauges are equidistributed circumferentially in a tread of the tyre.

3. Method according to any one of the preceding claims, in which the acoustic footprint series forms at least part of a Dirac comb.

4. Method according to any one of the preceding claims, in which the set (10) comprises from 1 to 32 and preferably from 1 to 12 gauges (18).

5. Method according to any one of the preceding claims, in which each gauge (18) comprises a sonic cavity (22) devised so that, beyond a predetermined radial wear threshold, the cavity (22) emerges radially to the exterior of the tyre (10) and is devised so as to be closed by the ground in a substantially leaktight manner as it passes across the area of the contact of the tyre (10) with the ground, the total volume of the cavity or cavities (22) being greater than or equal to 2 cm3, preferably 5 cm3.

6. Method according to any one of the preceding claims, in which the acoustic signal acquired (S_{F,B}) is processed by implementing at least one of the following steps:
- the frequency spectrum (SF) of the acoustic signal acquired (S_{F,B}) is determined (100);
- a frequency domain (Df) of the frequency spectrum (SF) of the acoustic signal acquired (S_{F,B}) lying between 500 and 2500 Hz is isolated (102);
- elementary frequency components of the frequency spectrum (SF) of the acoustic signal acquired (S_{F,B}) exhibiting a level greater than a predetermined threshold are isolated (106).

7. Method according to any one of the preceding claims, in which at least one series of at least two elementary frequency components is selected (206), each elementary frequency component of the series being distant from at least one adjacent elementary frequency component of the series by a frequency gap (Es) lying in a predetermined reference frequency interval (I).

8. Method according to the preceding claim, in which the predetermined reference frequency interval (I) lies between 1 and 300 Hz.

9. Method according to any one of the preceding claims, in which all the pairs of elementary frequency components are enumerated (200) and a frequency gap separating the elementary frequency components of each pair from one another is determined.

10. Method according to the preceding claim, in which each frequency gap of each pair of elementary frequency components is classed (202) in a so-called frequency gap family defined by a family frequency gap interval (σ_{F}).

11. Method according to Claims 7 and 10 taken together, in which each family frequency gap interval (σ_{F}) is determined as a function of the predetermined reference frequency interval (I) and of a frequency resolution (Δf) of the frequency spectrum (SF) of the acoustic signal acquired (S_{F,B}).

12. Method according to Claim 10 or 11, in which, in each family, all the series of elementary frequency components comprising at least two consecutive elementary frequency components separated by a so-called serial frequency gap (Es), lying in the family frequency gap interval (σ_{F}), are enumerated.

13. Method according to the preceding claim, in which, for each enumerated series of elementary frequency components:
- a search is conducted for at least one elementary frequency component that is distant from one of the elementary frequency components of the series by a frequency gap which is a multiple of the family frequency gap interval (σ_{F}); and
- each enumerated series is supplemented with the elementary frequency component or components that are distant from one of the elementary frequency components of the series by a frequency gap which is a multiple of the family frequency gap interval (σ_{F}).

14. Method according to Claim 12 or 13, in which, for each family, a serial index (Is) of each enumerated series is determined (300) as a function of at least one first predetermined characteristic (R, D, N_{S}, D_{E}) of the series.

15. Method according to the preceding claim, in which:
- a series is selected (302) by comparing each serial index (Is) of the enumerated series;
- for each selected series, a family index (If) of the series selected from each family is determined, as a function of at least one second predetermined characteristic (R, D, N_{S}, D_{E}) of the selected series; and
- the acoustic footprint series is selected by comparing each family index (If) of the selected series.

16. Method according to Claim 14, in which the acoustic footprint series is selected by comparing each serial index (Is) of each selected series of each family.

17. Method according to any one of Claims 14 to 16, in which a relevance index (Ip) of each first and/or second characteristic (R, D, N_{S}, D_{E}) is determined (304), each relevance index (Ip) being defined by a variable function of sigmoid type of each first and/or each second characteristic (R, D, N_{S}, D_{E}).

18. Method according to Claim 17, in which the local confidence index (Icl) is determined (306) on the basis of the relevance index or indices (Ip) respectively of each first and/or second characteristic (R, D, N_{S}, D_{E}).

19. Method according to any one of Claims 14 to 18, in which the first and/or second predetermined characteristic or characteristics comprise a signal/noise frequency ratio (R) and/or the number (N_{S}) of elementary frequency components in the series and/or a dispersion (D_{E}) of the frequency gap between the elementary frequency components of the series and/or the density (D) of the elementary frequency components of the series.

20. Method according to any one of the preceding claims, in which:
- several temporally successive acoustic signals (S_{F,B}) liable to comprise the acoustic footprint noise (SFT) are acquired, each acoustic signal (S_{F,B}) comprising several elementary frequency components;
- for each acoustic signal (S_{F,B}), an acoustic footprint series (S1-S11) is selected and a local confidence index (Icl) of the selected acoustic footprint series (S1-S11) is determined;
- a so-called global confidence index (Icg) is determined on the basis of the local confidence indices (Icl) of the acoustic footprint series (S1-S11);
- if the global confidence index (Icg) is, in absolute value, greater or less than a predetermined threshold (Sg) associated with this global confidence index (Icg), an alert of the wear of the tyre (10) is emitted.

21. Method according to any one of Claims 1 to 19, in which:
- several temporally successive acoustic signals (S_{F,B}) liable to comprise the acoustic footprint noise (SFT) are acquired, each acoustic signal (S_{F,B}) comprising several elementary frequency components;
- for each acoustic signal (S_{F,B}), an acoustic footprint series (S1-S11) is selected;
- a so-called global confidence index (Icg) is determined on the basis of a temporal continuity between the elementary frequency components of each selected acoustic footprint series (S1 -S11);
- if the global confidence index (Icg) is, in absolute value, greater or less than a predetermined threshold (Sg) associated with this global confidence index (Icg), an alert of the wear of the tyre (10) is emitted.

22. Computer program, **characterized in that** it comprises code instructions able to control the execution of the steps of the method according to any one of the preceding claims when it is executed on a computer.

23. Medium for recording data comprising, in recorded form, a program according to the preceding claim.

24. Making available of a program according to Claim 22 on a telecommunication network with a view to its downloading.
